# EUROPEAN PATENT APPLICATION

(11) **EP 3 184 933 A1**
(43) Date of publication of application: **28.06.2017**
(21) Application number: 15460131.4
(22) Date of filing: 23.12.2015
(51) Int. Cl.: F24J 3/08, F24D 11/02, F24D 19/10

(54) **DEVICE INTEGRATING A HEAT PUMP, A HEAT SOURCE AND ELECTRICITY SOURCES**

(71) Applicant: Mamet, Radoslaw, 66-016 Zielona Gora (PL)
(72) Inventor: GRECH, Radoslaw, 65-101 Zielona Gora (PL); MAMET, Radoslaw, 66-016 Zielona Gora (PL)

(57) **Abstract**

The invention relates to a device integrating a heat pump, heat sources and electricity sources characterised in that it is provided inside with an inverter (2), heat storage tank (3), three circulating pumps: a central heating circulating pump (4), a ventilation circulating pump (5) and a circulating pump (6) connected to a coil (7), three energy meters: an energy meter (8) in the central heating circuit, an energy meter (9) in the ventilation circuit, an energy meter (10) in the supply from the lower source to the heat pump, an electricity meter (11), a control system (12), a PV protection system (13) and a switchover three-way valve (14), wherein the device is provided with the following connection stub pipes leading to the outside: a stub pipe (15a) for connecting a ventilation supply pipe, a stub pipe (15b) for connecting a ventilation return pipe, a stub pipe (15c) for connecting a central heating return pipe, a stub pipe (15d) for connecting a central heating supply pipe, a stub pipe (15e) for connecting a supply pipe of the lower heat source to the heat pump, a stub pipe (15f) for connecting a return pipe from the heat pump to the lower heat source, a stub pipe (15g) for connecting a return pipe onto the lower heat source, a stub pipe (15h) for connecting a pipe of the lower supply source, a stub pipe (15i) for connecting a central heating return pipe to the heat pump in the integrating device 1, a stub pipe (15j) for connecting a central heating supply pipe from the heat pump.

## Description

The subject of the invention is a device integrating a heat pump, heat sources and electricity sources, intended in particular to integrate the operation of a ground source heat pump with other energy sources.

At present, hybrid arrangements with heat pumps using more than one energy source become increasingly popular. Solar collectors may be an additional, lower heat source or a component boosting a lower heat source. The introduction of an additional lower source increases requirements for the control and monitoring system. A hybrid system diagram may be very complex. Arrangements combining photovoltaic systems with heat pumps are known from descriptions in applications CN202973573, CN202013043, CN2888357.
However, there is no device which could be connected to several heat sources or energy sources and enhance the operation of various heat source arrangements.

According to the invention, the device integrating a heat pump, heat sources and electricity sources features an internal inverter, heat storage tank, three circulation pumps: a central heating circulation pump, a ventilation circulation pump and a circulation pump connected to a coil, and three energy meters: an energy meter in the central heating circuit, an energy meter in the ventilation circuit, an energy meter in the supply from the lower source to the heat pump, an electricity meter, a control system, a PV protection system and a switchover three-way valve, wherein the device is provided with the following connection stub pipes leading to the outside: a stub pipe for connecting a ventilation supply pipe, a stub pipe for connecting a ventilation return pipe, a stub pipe for connecting a central heating return pipe, a stub pipe for connecting a central heating supply pipe, a stub pipe for connecting a supply pipe of the lower heat source to the heat pump, a stub pipe for connecting a return pipe from the heat pump to the lower heat source, a stub pipe for connecting a return pipe onto the lower heat source, a stub pipe for connecting a pipe of the lower supply source, a stub pipe for connecting a central heating return pipe to the heat pump in the integrating device, a stub pipe for connecting a central heating supply pipe from the heat pump.

The device is connected to a ground source heat pump with power up to 40 kW using the stub pipe for connecting a supply pipe of the lower heat source to the heat pump and the stub pipe for connecting a return pipe from the heat pump to the lower heat source.

The device is connected to a vertical ground heat exchanger using the stub pipe for connecting a return pipe onto the lower heat source and the stub pipe for connecting a pipe of the lower supply source.

Photovoltaic panels are connected to the inverter embedded in the device.

The device is connected to a mechanical ventilation system provided with a circular exchanger 20 using the stub pipe for connecting the ventilation supply pipe and the stub pipe for connecting the ventilation return pipe.

The device is connected to the central heating system using the stub pipe for connecting the central heating return pipe and the stub pipe for connecting the central heating supply pipe and the stub pipe for connecting the central heating return pipe from the heat pump in the integrating device and the stub pipe for connecting the central heating supply pipe from the heat pump.

The device according to the invention allows for the integration of various energy sources: a heat pump, a photovoltaic system and a lower heat source. The idea of the device is to use such an arrangement for the connection of each installation as to minimise the complexity of a hybrid installation. All the necessary subsystems of a hybrid system are installed within the device: connections and protections for the heat installation, including the domestic hot water installation, current and surge protections for photovoltaic systems, electricity and heat billing setups and arrangement automation systems with a visualisation system on the operator's panel. The complete monitoring of the device operation will also be available via the Internet in order to ensure that the contractor may supervise the operation of the system within which the device works.
The device is a space-saving solution and it is in an operational condition once it is connected to the lower heat source and the heat pump.
Within this system, the primary circuit, i.e. cold circuit, is split to the lower source of the heat pump and to the supply for the mechanical ventilation - the cooling medium, glycol, is forced directly from the ground exchanger to the exchanger in the ventilation system, where cold is received and the heated medium is then guided to the heat pump as the lower source supply. In the heating mode, the three-way valve switches over and cuts off the glycol circulation from the ventilation. A heat storage tank is also embedded and it stores warm water, which supplies to secondary circuit and the ventilation system.

The invention is shown in a drawing, wherein Fig. 1 shows in a scheme a device integrating a heat pump, heat sources and electricity sources; Fig. 2 shows a top view of the device indicating the location of connection stub pipes; Fig. 3 shows in a scheme the device integrating a heat pump, heat sources and electricity sources connected to photovoltaic panels and a mechanical ventilation system.

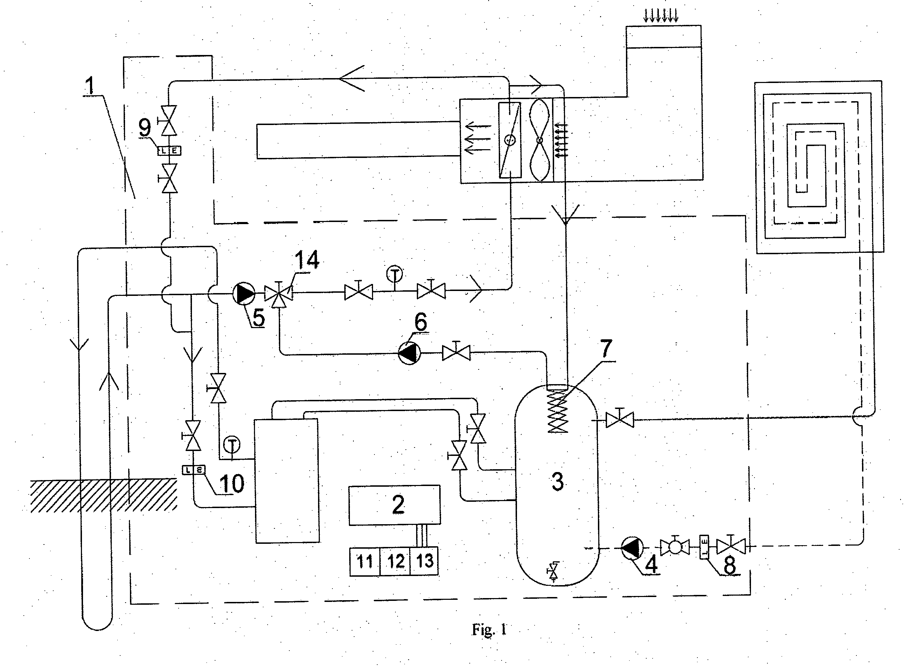

Fig. 1 shows in a scheme the device integrating a heat pump, heat sources and electricity sources.
The device 1 integrating a heat pump, heat sources and electricity sources is a lockable cuboid-shaped container with dimensions 1631 x 550 x 550 mm, provided inside with an inverter 2 disposed in the upper portion of the device 1 at the height of 1305 mm, heat storage tank 3 disposed in the lower portion of the device 1 at the height of 50 mm, three circulating pumps: a central heating circulating pump 4, a ventilation circulating pump 5 and a circulating pump 6 connected to a coil 7, three energy meters: an energy meter 8 in the central heating circuit, an energy meter 9 in the ventilation circuit, an energy meter 10 in the supply from the lower source to the heat pump, an electricity meter 11, a control system 12, a PV protection system 13 and a switchover three-way valve 14.

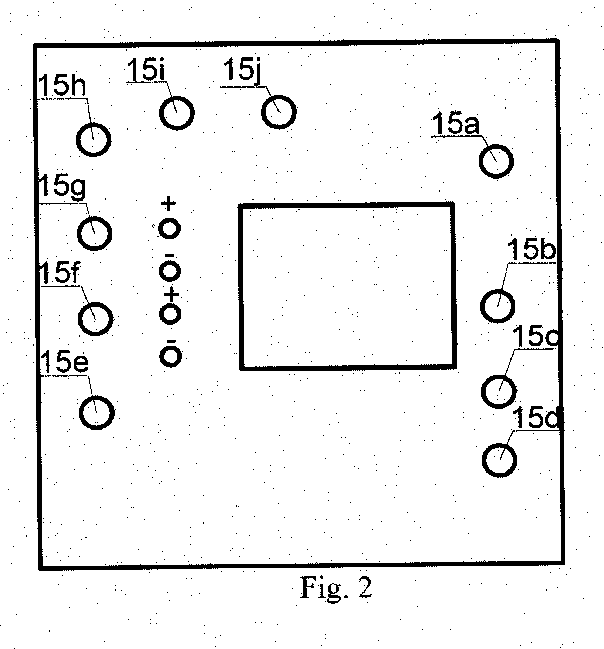

The device is provided with connection stub pipes 15 not shown in the drawing, whose location is illustrated by Fig. 2 showing a top view of the device integrating a heat pump, heat sources and electricity sources indicating the location of connection stub pipes 15.

The device 1 is provided with the following connection stub pipes 15 leading to the outside:
- a stub pipe 15a for connecting a ventilation supply pipe,
- a stub pipe 15b for connecting a ventilation return pipe,
- a stub pipe 15c for connecting a central heating return pipe,
- a stub pipe 15d for connecting a central heating supply pipe,
- a stub pipe 15e for connecting a supply pipe of the lower heat source to the heat pump,
- a stub pipe 15f for connecting a return pipe from the heat pump to the lower heat source,
- a stub pipe 15g for connecting a return pipe onto the lower heat source,
- a stub pipe 15h for connecting a pipe of the lower supply source,
- a stub pipe 15i for connecting a central heating return pipe to the heat pump in the integrating device 1,
- a stub pipe 15j for connecting a central heating supply pipe from the heat pump.

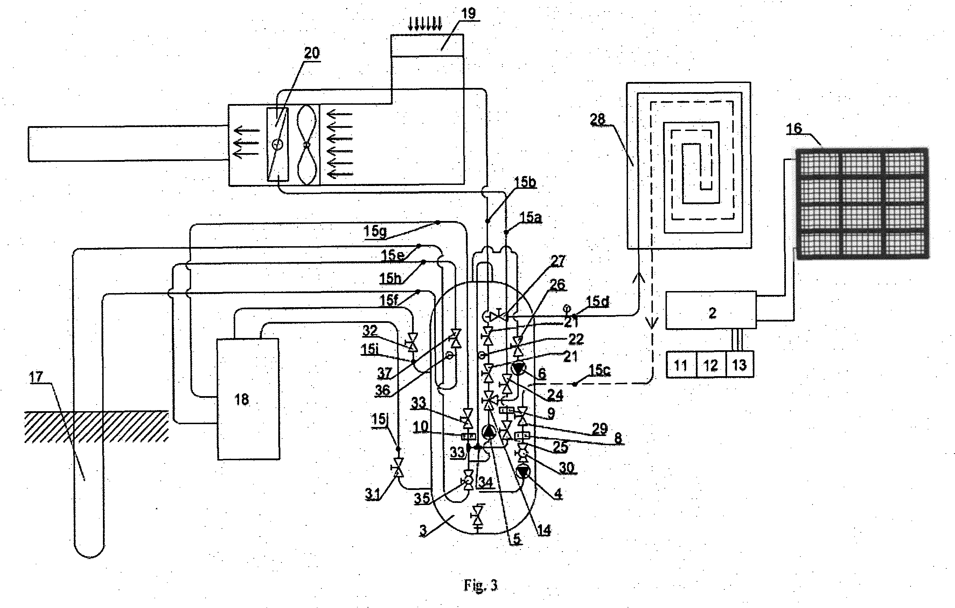

Fig. 3 shows in a scheme the device integrating a heat pump, heat sources and electricity sources connected to photovoltaic panels and a mechanical ventilation system.

Twelve photovoltaic panels 16 are connected to the inverter 2 embedded in the device 1. The energy generated by photovoltaic panels 16 is transferred to the power grid. The inverter 2 cooperates with photovoltaic panels 16 and converts the direct current energy received from photovoltaic panels 16 to alternating current.

The lower heat source is a vertical ground exchanger 17 connected to the device 1 using the stub pipe 15g for connecting a return pipe onto the lower heat source and the stub pipe 15h for connecting a pipe of the lower supply source.

The device is connected to a ground source heat pump 18 with power of 40 kW using the stub pipe 15e for connecting a supply pipe of the lower heat source to the heat pump and the stub pipe 15f for connecting a return pipe from the heat pump to the lower heat source.

The device is connected to a mechanical ventilation system, which consists of an air supply unit 19, a circular exchanger 20 and recuperation. The device 1 is connected to the circular exchanger 20 using the stub pipe 15a for connecting the ventilation supply pipe and the stub pipe 15b for connecting the ventilation return pipe.

The device 1 is connected to the central heating system using the stub pipe 15c for connecting the central heating return pipe and the stub pipe 15d for connecting the central heating supply pipe and the stub pipe 15i for connecting the central heating return pipe from the heat pump in the integrating device 1 and the stub pipe 15j for connecting the central heating supply pipe from the heat pump.

The lower source circuit is split to the supply of the heat pump 18 and to the supply for the air supply unit 19. The supply for the air supply unit is split via the three-way valve 14, which switches over depending on the operation mode selected with the control system 12, i.e. heating mode or cooling mode.

In the cooling option, the glycol from the lower source - the vertical ground exchanger 17 - supplies directly the air supply unit 19 through a copper line with a diameter Φ22, on which the following are mounted in succession: the ventilation circulating pump 5, the three-way valve 14, a ball valve 21, a temperature sensor 22 and a ball valve 23, while the heated glycol on the return from the circular exchanger 20 is guided to the supply of the heat pump through a copper pipe with a diameter Φ22, on which the following are mounted in succession: a ball valve 24, an energy meter 9 and a ball valve 25.

With the heating option, the glycol circulates between the ventilation and a coil 7 disposed in the heat storage tank 3. This circulation runs through a copper pipe with a diameter Φ22. The heated glycol in the coil 7 flows through a ball valve 26, the circulating pump 6 connected to the coil 7, the three-way valve 14, the ball valve 21, the temperature sensor 22, the valve 23 and reaches the circular exchanger 20 in the mechanical ventilation system, from where it returns directly to the coil pipe 7 through a pipe with a diameter Φ22.

The heating circuit of the central heating starts in the heat storage tank 3, from which the supply is provided with a copper pipe with a diameter Φ28, on which there is a ball valve 27 to heat receivers 28, and the return runs through a copper pipe with a diameter Φ28, on which the following are mounted: a ball valve 29, the energy meter 8 in the central heating circuit, a ball valve 30 with a filter and the central heating circulating pump 4. The heat storage tank 3 is supplied by the heat pump 18 via copper pipes with a diameter Φ28, which are connected to hoses provided from the heat pump 18. Cut-off ball valves 31,32 are mounted on both lines.

The supply of the heat pump 18 from the lower source runs through copper pipes with diameter Φ28. Two brazen T-pipes 33, 34, a ball valve with a filter 35, the energy meter 10 in the supply from the lower source to the heat pump are mounted on the supply pipe, while a temperature sensor 36 and a ball valve 37 are mounted on the return side.

Fittings are connected to pipes using GZ/ZAPRAS brazen adapters while pipe-to-pipe connections are made with press connectors.

The device 1 is connected to the control system cooperating with the central heating system, domestic hot water system and ventilation system. The control system comprises sensors and a programmable operator's panel not shown in the drawing.

## Claims

1. A device integrating a heat pump, heat sources and electricity sources **characterised in that** it is provided inside with an inverter (2), heat storage tank (3), three circulating pumps: a central heating circulating pump (4), a ventilation circulating pump (5) and a circulating pump (6) connected to a coil (7), three energy meters: an energy meter (8) in the central heating circuit, an energy meter (9) in the ventilation circuit, an energy meter (10) in the supply from the lower source to the heat pump, an electricity meter (11), a control system (12), a PV protection system (13) and a switchover three-way valve (14), wherein the device is provided with the following connection stub pipes leading to the outside: a stub pipe (15a) for connecting a ventilation supply pipe, a stub pipe (15b) for connecting a ventilation return pipe, a stub pipe (15c) for connecting a central heating return pipe, a stub pipe (15d) for connecting a central heating supply pipe, a stub pipe (15e) for connecting a supply pipe of the lower heat source to the heat pump, a stub pipe (15f) for connecting a return pipe from the heat pump to the lower heat source, a stub pipe (15g) for connecting a return pipe onto the lower heat source, a stub pipe (15h) for connecting a pipe of the lower supply source, a stub pipe (15i) for connecting a central heating return pipe to the heat pump in the integrating device 1, a stub pipe (15j) for connecting a central heating supply pipe from the heat pump.

2. The device according to claim 1 **characterised in that** it is connected to a ground source heat pump (18) with power up to 40 kW using the stub pipe (15e) for connecting a supply pipe of the lower heat source to the heat pump and the stub pipe (15f) for connecting a return pipe from the heat pump to the lower heat source.

3. The device according to claim 1 or 2 **characterised in that** it is connected to a vertical ground heat exchanger (17) using the stub pipe (15g) for connecting a return pipe onto the lower heat source and the stub pipe (15h) for connecting a pipe of the lower supply source.

4. The device according to claims 1 to 3 **characterised in that** photovoltaic panels (16) are connected to the inverter (2) embedded in the device (1).

5. The device according to claims 1 to 4 **characterised in that** it is connected to a mechanical ventilation system provided with a circular exchanger (20) using the stub pipe (15a) for connecting the ventilation supply pipe and the stub pipe (15b) for connecting the ventilation return pipe.

6. The device according to claims 1 to 5 **characterised in that** it is connected to the central heating system using the stub pipe (15c) for connecting the central heating return pipe and the stub pipe (15d) for connecting the central heating supply pipe and the stub pipe (15i) for connecting the central heating return pipe from the heat pump in the integrating device and the stub pipe (15j) for connecting the central heating supply pipe from the heat pump.
